# DEMANDE DE BREVET EUROPEEN

(11) **EP 2 538 294 A1**
(43) Date de publication de la demande: **26.12.2012**
(21) Numéro de dépôt: 11170961.4
(22) Date de dépôt: 22.06.2011
(51) Int. Cl.: G05B 19/414

(54) **Servos pour machines-outils**

(71) Demandeur: Tornos SA, 2740 Moutier (CH)
(72) Inventeur: Currat, Jacques, 2740 Moutier (CH)
(74) Mandataire: Vesterinen, Jussi Tapio

(57) **Abrégé**

La présente invention concerne un procédé de fonctionnement d'un servo d'une machine-outil. Le servo est agencé pour piloter un moteur d'un axe de la machine-outil. Le procédé comprend : (a) la définition (103) des conditions pour l'interruption de l'alimentation du moteur ; (b) la surveillance (105) du fonctionnement du moteur et/ou de l'axe ; et (c) l'interruption (115) de l'alimentation en courant du moteur pendant le fonctionnement de la machine-outil à chaque fois que les conditions pour l'interruption sont remplies.

## Description

### DOMAINE DE L'INVENTION

L'invention se rapporte à un procédé de fonctionnement d'un servo-amplificateur de machine-outil, dans lequel le servo-amplificateur est agencé pour piloter un moteur d'un axe de la machine-outil. L'invention se rapporte aussi à un programme d'ordinateur pour la mise en oeuvre de ce procédé, à un dispositif, tel qu'un servo-amplificateur, et à une machine-outil comprenant ce dispositif.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son axe. L'usinage même est effectué par des outils placés autour de la ou des broches. Le pilotage des machines-outils modernes est généralement contrôlé par une commande numérique.

Les axes linéaires d'une machine-outil sont souvent composés d'un moteur électrique qui entraine une vis qui entraîne elle-même une coulisse. Le moteur électrique est piloté par un servo-amplificateur, appelé ci-après un « servo ». Ce système est en général irréversible, c'est-à-dire que les perturbations et les efforts agissant sur la coulisse sont absorbés par la mécanique de la coulisse et de la vis et ne sont pas retransmis au moteur. Ainsi, lorsque le moteur est à l'arrêt, il n'a pas à répondre aux sollicitations agissant sur la coulisse.

Les systèmes de servo amplificateurs existant ne permettent pas de reconnaître et de gérer ce type de situation et ainsi d'éviter d'envoyer une énergie inutile dans un moteur à l'arrêt. De plus, l'énergie transmise inutilement au moteur se transforme en chaleur, ajoutant ainsi une perturbation thermique additionnelle dans la zone d'usinage.

L'objet de la présente invention est de surmonter les problèmes liés au réglage des moteurs électriques des axes de la machine-outil dans les solutions connues.

### RESUME DE L'INVENTION

La présente invention propose donc une solution pour un meilleur fonctionnement des servos pilotant des moteurs électriques pour éviter toute dépense d'énergie et toute dispersion thermique inutile des moteurs.

A cet effet, l'invention a pour objet un procédé de fonctionnement d'un servo d'une machine-outil selon la revendication 1.

La solution proposée permet d'éviter d'envoyer une énergie inutile dans un moteur en arrêt. Par conséquent on peut donc éviter toute dispersion thermique inutile dans les moteurs et leur surchauffe.

L'invention a aussi pour objet un firmware agencé pour effectuer le procédé selon la revendication 1.

Avantageusement ce firmware est le logiciel du servo-amplificateur ou du système qui pilote ce servo-amplificateur. Le pilotage du servo-amplificateur est soit une commande numérique, soit un PC équipé d'un logiciel de gestion d'axes.

L'invention a également pour objet un dispositif agencé pour effectuer le procédé décrit ci-dessus.

L'invention a également pour objet un servo pour une machine-outil, le servo comprenant ledit dispositif.

L'invention a également pour objet une machine-outil comprenant ledit dispositif.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- - figure 1 :: un organigramme qui illustre le procédé selon un aspect de la présente invention, et
- - figure 2 :: un bloc-diagramme qui illustre un exemple d'une architecture d'un axe d'une machine outil.

### DESCRIPTION DETAILLEE DES MODES DE REALISATION

En se reportant aux dessins, un procédé pour faire fonctionner les servos de la machine-outil selon différents aspects conformément à la présente invention est maintenant expliqué plus en détail.

L'objet de l'invention se compose d'un dispositif permettant de surveiller le comportement (la position, la vitesse, etc.) du moteur d'un axe d'une machine-outil en continu, et d'interrompre son alimentation en courant à chaque fois que certaines conditions pour l'interruption de courant sont remplies. Par exemple, l'alimentation est interrompue quand le moteur est arrêté et que sa position est atteinte. Le dispositif est évidemment optionnel car tous les axes d'une machine-outil ne sont pas irréversibles. Les machines-outils sont équipées d'axes numériques réversibles, c'est-à-dire un effort appliqué sur l'outil a un effet sur le moteur, et d'autres axes numériques non-réversibles, c'est-à-dire un effort appliqué sur l'outil n'a aucun effet sur le moteur.

Un axe de machines-outils ne bouge pas continuellement et même lorsqu'aucun mouvement n'est demandé et que l'axe est dans sa tolérance de position, le courant dans le moteur n'est pas nul dans les solutions conventionnelles. Le dispositif selon la présente invention effectuera, au rythme de la boucle de réglage, la surveillance de la consigne de mouvement du moteur et/ou de l'axe, la mesure de l'erreur de position du moteur et/ou de l'axe, la mesure de la valeur de vitesse réelle du moteur et/ou de l'axe, et la mesure de courant instantané du moteur et/ou de l'axe. Par la boucle de réglage on comprend une boucle de régulation ou bien une boucle d'asservissement qui est constituée d'un ou plusieurs capteurs qui mesurent la grandeur physique que l'on veut contrôler, et qui sont reliés au système de commande qui peut modifier cette grandeur physique. Lorsque l'axe et/ou le moteur est/sont dans sa/ses tolérance(s) de position, que la vitesse réelle du moteur et/ou de l'axe ne dépasse(nt) pas de limite prédéfinie, que le(s) courant absolu(s) du moteur et/ou de l'axe ne dépasse(nt) pas de limite prédéfinie et qu'il n'a pas d'ordre de mouvement du moteur et/ou de l'axe, l'étage de puissance de commande du moteur est désactivé (Power off des axes immobiles).

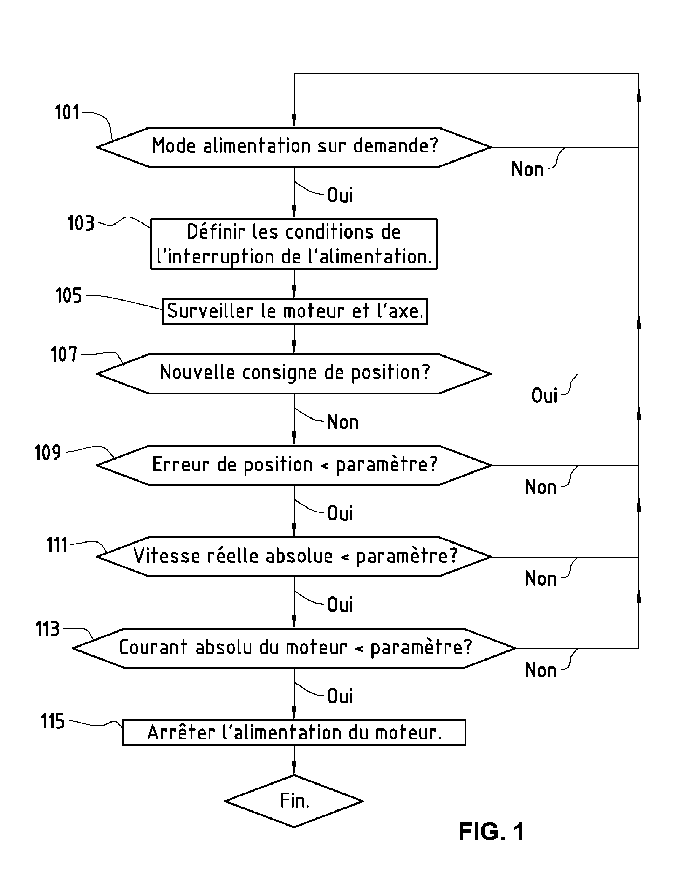

L'organigramme de la figure 1 résume le procédé décrit ci-dessus. Toutes les étapes du procédé peuvent être effectuées par le nouveau dispositif selon la présente invention. Ce dispositif peut être le servo lui-même. Dans ce cas-là, l'intelligence serait dans le servo. A l'étape 101 on détermine si le mode d'alimentation est « sur demande ». Le mode d'alimentation de chaque servo est défini par un paramètre : alimentation continue ou alimentation sur demande. Le fabricant de la machine peut activer ou non cette fonction pour chaque axe en fonction par exemple de sa réversibilité. Si le mode d'alimentation est « sur demande », on peut avancer à l'étape 103. A l'étape 103 on définit les conditions de l'interruption de l'alimentation du moteur. A l'étape 105 on surveille le moteur et/ou l'axe. Il peut être avantageux de surveiller le moteur et l'axe en parallèle car le moteur pourrait être arrêté en position alors que l'axe ne s'y trouve pas.

A l'étape 107 on détermine si le moteur ou l'axe a une nouvelle consigne de position. Si la réponse est positive, la procédure continue à l'étape 101. Par contre si on détermine qu'il n'y a pas de consigne, la procédure continue à l'étape 109. A cette étape on détermine si l'erreur de position du moteur ou de l'axe est plus petite qu'un paramètre prédéfini. Si la réponse est négative, la procédure continue à l'étape 101. Par contre si l'erreur de position est plus petite que le paramètre prédéfini, on avance à l'étape 111.

A l'étape 111 on détermine si la vitesse réelle absolue du moteur ou de l'axe est plus petite qu'un paramètre prédéfini. Si la réponse est négative, la procédure continue à l'étape 101. Par contre si la vitesse réelle absolue est plus petite que le paramètre prédéfini, la procédure continue à l'étape 113. A l'étape 113 on détermine si le courant absolu du moteur ou de l'axe est plus petit qu'un paramètre prédéfini. Si la réponse est négative, la procédure continue à l'étape 101. Par contre si le courant absolu est plus petit que le paramètre prédéfini, on peut avancer à l'étape 115. A l'étape 115 on arrête l'alimentation du moteur. L'interruption de l'alimentation consiste à supprimer tout courant dans le moteur. Pour des raisons de rapidité, la suppression du courant dans le moteur est réalisée au moyen des transistors de commande des différentes phases. L'étage de puissance d'un servo-amplificateur est aujourd'hui réalisé avec des transistors, mais il peut aussi être réalisé par des thyristors ou d'autres semi-conducteurs à venir.

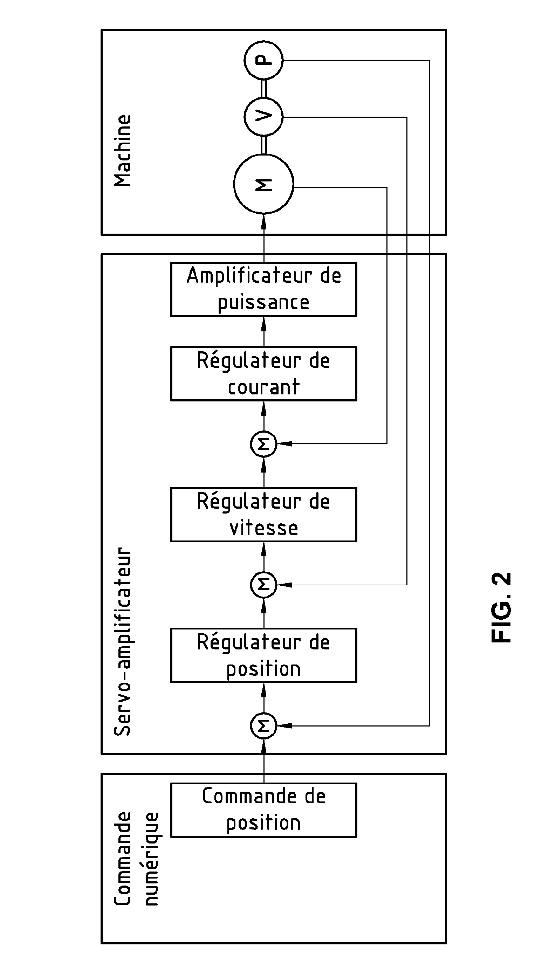

La figure 2 illustre un exemple d'une architecture d'un axe d'une machine-outil. Sur cette figure « M » signifie le moteur, « V » signifie la vitesse et « P » signifie la position. Sur cette figure on peut voir la position actuelle du moteur, la valeur de la vitesse réelle du moteur et la valeur du courant instantané du moteur. Ces valeurs sont transférées dans le servo-amplificateur qui les prend en compte pour piloter le moteur de la machine.

On pourrait aussi envisager plusieurs variantes dans les configurations expliquées ci-dessus sans sortir du cadre de la présente invention. Par exemple on peut changer l'ordre des certaines étapes de l'organigramme. Plus précisément l'ordre des étapes 107, 109, 111 et 113 peut être changé. On peut aussi envisager une solution où un servo-amplificateur pilote 2 moteurs ou plusieurs moteurs.

## Revendications

1. Un procédé de fonctionnement d'un servo d'une machine-outil, le servo étant agencé pour piloter au moins un moteur d'un axe de la machine-outil, le procédé comprend :
● la définition (103) d'au moins une condition pour l'interruption de l'alimentation du moteur ;
● la surveillance (105) du fonctionnement du moteur et/ou de l'axe; et
● l'interruption (115) de l'alimentation en courant du moteur pendant le fonctionnement de la machine-outil si ladite condition pour l'interruption est remplie.

2. Le procédé selon la revendication 1, dans lequel ladite condition est au moins une des suivantes : le moteur et/ou l'axe est/sont arrêté(s), la/les position(s) souhaitée(s) du moteur et/ou de l'axe est/sont atteinte(s), la/les vitesse(s) réelle(s) absolue(s) du moteur et/ou de l'axe est/sont plus basse(s) qu'une/des vitesse(s) donnée(s), et le(s) courant(s) absolu(s) du moteur et/ou de l'axe est/sont plus petit(s) qu'un/des courant(s) donné(s).

3. Le procédé selon l'une quelconque des revendications précédentes, dans lequel le procédé comprend en plus la vérification du type de l'axe et l'alimentation est interrompue seulement si l'axe est irréversible.

4. Le procédé selon l'une quelconque des revendications précédentes, dans lequel le procédé comprend en plus la détermination (101) du mode l'alimentation du servo et l'alimentation est interrompue seulement si le mode de l'alimentation du servo est sur demande.

5. Le procédé selon l'une quelconque des revendications précédentes, dans lequel le moteur et/ou l'axe est/sont surveillé(s) en continu.

6. Le procédé selon l'une quelconque des revendications précédentes, dans lequel la surveillance est effectuée en surveillant la/les consigne(s) de mouvement du moteur et/ou de l'axe, l'erreur/les erreurs de position du moteur et/ou l'axe, la/les vitesse(s) réelle(s) absolue(s) du moteur et/ou de l'axe et/ou le/les courant(s) absolu(s) du moteur et/ou de l'axe.

7. Le procédé selon l'une quelconque des revendications précédentes, dans lequel la surveillance est effectuée au rythme de la boucle de réglage.

8. Le procédé selon l'une quelconque des revendications précédentes, dans lequel tout courant est coupé dans le moteur au moment où l'alimentation est interrompue.

9. Un logiciel firmware pour un pilotage d'au moins un servo d'une machine-outil, le firmware étant agencé pour exécuter le procédé selon l'une quelconque des revendications précédentes lorsque le firmware est exécuté dans une unité de commande dudit servo.

10. Un dispositif pour faire fonctionner un servo d'une machine-outil, le servo étant agencé pour piloter un moteur d'un axe de la machine-outil, le dispositif comprend des moyens pour :
● définir au moins une condition pour l'interruption de l'alimentation du moteur ;
● surveiller le(s) fonctionnement(s) du moteur et/ou de l'axe; et
● interrompre l'alimentation en courant du moteur pendant le fonctionnement de la machine-outil une fois que ladite condition pour l'interruption est remplie.

11. Le dispositif selon la revendication 10, dans lequel le dispositf comprend en plus au moins un élément de commande des différentes phases agencé pour interrompre l'alimentation en courant.

12. Le dispositif selon la revendication 11, dans lequel l'élément de commande est un semi-conducteur, notamment un transistor ou un thyristor.

13. Un servo comprenant le dispositif selon l'une quelconque des revendications 10 à 12.

14. Une machine outil comprenant le dispositif selon l'une quelconque des revendications 10 à 12.
